# EUROPEAN PATENT APPLICATION

(11) **EP 2 133 946 A1**
(43) Date of publication of application: **16.12.2009**
(21) Application number: 07806952.3
(22) Date of filing: 07.09.2007
(51) Int. Cl.: H01M 4/96, H01M 4/90, H01M 8/10

(54) **FUEL CELL**

(30) Priority: 27.03.2007 JP 2007082891
(71) Applicant: Daihatsu Motor Co., Ltd., Ikeda-shi, Osaka 563-8651 (JP)
(72) Inventor: ASAZAWA, Koichiro, Gamo-gun Shiga 520-2593 (JP); YAMADA, Koji, Gamo-gun Shiga 520-2593 (JP); TANAKA, Hirohisa, Gamo-gun Shiga 520-2593 (JP)
(74) Representative: Schwabe - Sandmair - Marx
(86) International application number: PCT/JP2007/067520
(87) International publication number: WO 2008/117485

(57) **Abstract**

Provided is a fuel cell including an electrolyte allowing an anion component to migrate; a fuel-side electrode and an oxygen-side electrode being arranged in opposed relation to each other while sandwiching the electrolyte; a fuel supplying material for supplying fuel to the fuel-side electrode; and an oxygen supplying material for supplying oxygen to the oxygen-side electrode, in which the oxygen-side electrode and/or the fuel-side electrode contain(s) a transition metal, and at least one of a complex-forming organic compound and an electrically-conductive polymer.

## Description

### TECHNICAL FIELD

The present invention relates to a fuel cell.

### BACKGROUND ART

Various types of fuel cells such as an alkaline fuel cell (AFC), a polymer electrolyte fuel cell (PEFC), a phosphoric acid fuel cell (PAFC), a molten carbonate fuel cell (MCFC), and a solid oxide fuel cell (SOFC), have been known as a fuel cell hitherto. There has been studied that these fuel cells are used for various applications such as automotive application.

For example, the polymer electrolyte fuel cell includes a fuel-side electrode (anode) to which fuel is supplied, and an oxygen-side electrode (cathode) to which oxygen is supplied, and these electrodes are arranged in opposed relation to each other while sandwiching an electrolyte layer made of solid polymer membrane. In this fuel cell, while hydrogen gas is supplied to the anode, air is supplied to the cathode, thereby producing an electromotive force between the anode and the cathode, resulting in electricity generation.

As such polymer electrolyte fuel cell, for example, a fuel cell including an anode made of carbon on which a cobalt catalyst is supported, a cathode made of carbon on which a silver catalyst is supported, and an electrolyte layer made of an anion exchange membrane is known (see, for example, Patent Document 1).
Patent Document 1: Japanese Unexamined Patent Publication No. 2006-244961

### DISCLOSURE OF THE INVENTION

### PROBLEMS TO BE SOLVED

In the polymer electrolyte fuel cell mentioned above, a hydrogen oxidation reaction at the anode and an oxygen reduction reaction at the cathode are activated by using a cobalt catalyst for the anode and a silver catalyst for the cathode, respectively, which allows the fuel cell to enhance its electricity generating performance.

However, since the cobalt catalyst and the silver catalyst are expensive, it is desired to minimize the amount of the cobalt catalyst required for activation of the hydrogen oxidation reaction or the amount of the silver catalyst required for activation of the oxygen reduction reaction. Further, in the fuel cell art, it is always expected that a chemical reaction is activated at each electrode (anode and cathode), resulting in enhancement of electricity generating performance of fuel cells. Therefore, there is expected a fuel cell having more enhanced electricity generating performance as compared with the polymer electrolyte fuel cell mentioned above.

It is an object of the present invention to provide a fuel cell capable of activating an oxygen reduction reaction at a cathode (oxygen-side electrode) and/or a hydrogen oxidation reaction at an anode (fuel-side electrode) at low cost, which allows enhancement of its electricity generating performance.

### MEANS FOR SOLVING THE PROBLEM

To achieve the above object, the fuel cell of the present invention includes an electrolyte allowing an anion component to migrate; a fuel-side electrode and an oxygen-side electrode being arranged in opposed relation to each other while sandwiching the electrolyte; a fuel supplying material for supplying fuel to the fuel-side electrode; and an oxygen supplying material for supplying oxygen to the oxygen-side electrode, in which the oxygen-side electrode and/or the fuel-side electrode contain(s) a transition metal, and at least one of a complex-forming organic compound and an electrically-conductive polymer.

In the fuel cell of the present invention, it is preferable that the transition metal is silver or cobalt, and the complex-forming organic compound and the electrically-conductive polymer are polypyrrole.

### EFFECT OF THE INVENTION

According to the fuel cell of the present invention, the oxygen-side electrode and/or the fuel-side electrode contain(s) a transition metal and at least one of a complex-forming organic compound and an electrically-conductive polymer, so that an oxygen reduction reaction at the oxygen-side electrode and/or a hydrogen oxidation reaction at the fuel-side electrode can be activated. As a result, the electricity generating performance of the fuel cell can be enhanced. Further, when the oxygen-side electrode and/or the fuel-side electrode contain(s) at least one of a complex-forming organic compound and an electrically-conductive polymer, the use of the transition metal such as a cobalt catalyst and a silver catalyst can be reduced, so that the cost required for activation of the oxygen reduction reaction and the hydrogen oxidation reaction as described above can be reduced. Such fuel cell can be used suitably for various industrial products such as power supply for driving motor in automobile, ship, aircraft, etc., and power supply in communication terminal such as cellular phone.

### BRIEF DESCRIPTION OF THE DRAWINGS

FIG. 1 is a schematic configurational diagram illustrating a fuel cell of an embodiment according to the present invention.
FIG. 2 is a graph illustrating the results of measurement of the activity of the oxygen-side electrode, showing the results of Example 1 and Comparative Example 1.
FIG. 3 is a graph illustrating the results of measurement of the activity of the oxygen-side electrode, showing the results of Example 2 and Comparative Example 2.
FIG. 4 is a graph illustrating the results of measurement of the activity of the fuel-side electrode, showing the results of Example 3 and Comparative Example 3.
FIG. 5 is a graph illustrating the comparison of the fuel cells of Examples 4 to 6 and the fuel cell of Comparative Example 4 in current-voltage properties.

### EMBODIMENT OF THE INVENTION

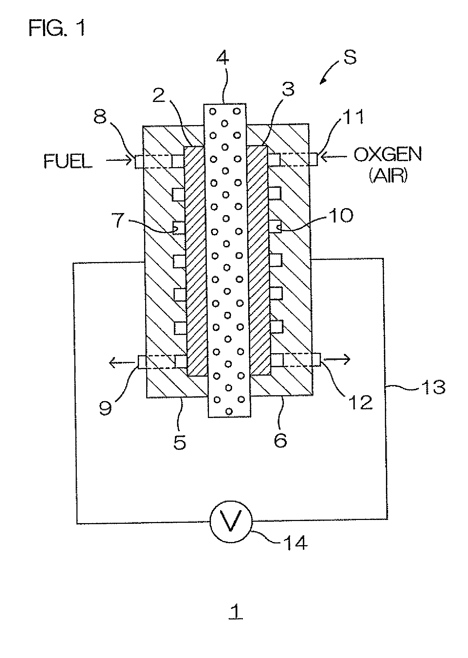

FIG. 1 is a schematic configurational diagram illustrating a fuel cell of an embodiment according to the present invention.

The fuel cell 1 is a polymer electrolyte fuel cell, which includes a plurality of cells S for fuel cell and is formed as a stack structure having these cells S for fuel cell stacked therein. In FIG. 1, only one cell S for fuel cell is shown for easy illustration.

The cell S for fuel cell includes a fuel-side electrode 2 (anode), an oxygen-side electrode 3 (cathode), and an electrolyte layer 4.

At least one of the fuel-side electrode 2 and the oxygen-side electrode 3 contains a transition metal, and a complex-forming organic compound and/or an electrically-conductive polymer. That is, in the cell S for fuel cell, there are three embodiments of the electrode material composing the fuel-side electrode 2 and the oxygen-side electrode 3. In a first embodiment (in which the oxygen-side electrode 3 is known), the fuel-side electrode 2 contains a transition metal, and a complex-forming organic compound and/or an electrically-conductive polymer, and the oxygen-side electrode 3 does not contain a transition metal, and a complex-forming organic compound and/or an electrically-conductive polymer. In a second embodiment (in which the fuel-side electrode 2 is known), the fuel-side electrode 2 does not contain a transition metal, and a complex-forming organic compound and/or an electrically-conductive polymer, but the oxygen-side electrode 3 contains a transition metal, and a complex-forming organic compound and/or an electrically-conductive polymer. Further, in a third embodiment, both the fuel-side electrode 2 and the oxygen-side electrode 3 contain a transition metal, and a complex-forming organic compound and/or an electrically-conductive polymer.

In the above embodiments, it is preferable that, in the cell S for fuel cell, at least the oxygen-side electrode 3 contains a transition metal, and a complex-forming organic compound and/or an electrically-conductive polymer.

When the fuel-side electrode 2 and the oxygen-side electrode 3 contain a transition metal, and a complex-forming organic compound and/or an electrically-conductive polymer, examples of the electrode material composing the fuel-side electrode 2 and the oxygen-side electrode 3 include those in which a transition metal is supported on a complex-forming organic compound and/or an electrically-conductive polymer, and those in which a transition metal is supported on a composite (this composite is hereinafter referred to as "carbon composite,") made of a complex-forming organic compound and/or an electrically-conductive polymer, and carbon (e.g., known carbon such as carbon black).

Examples of the transition metal include scandium (Sc), titanium (Ti), and vanadium (V), chromium (Cr), manganese (Mn), iron (Fe), cobalt (Co), nickel (Ni), copper (Cu), yttrium (Y), zirconium (Zr), niobium (Nb), molybdenum (Mo), technetium (Tc), ruthenium (Ru), rhodium (Rh), palladium (Pd), silver (Ag), lanthanum (La), hafnium (Hf), tantalum (Ta), tungsten (W), rhenium (Re), osmium (Os), iridium (Ir), platinum (Pt), and gold (Au). Among them, silver or cobalt is preferable. These may be used alone or in combination of two or more kinds. The support concentration of the transition metal is in the range of, for example, 0.1% by weight to 60% by weight, or preferably 1% by weight to 40% by weight.

The complex-forming organic compound is an organic compound which forms a complex with a metal atom by coordinating the organic compound to the metal atom, and examples thereof include complex-forming organic compounds such as pyrrole, porphyrin, tetramethoxy phenylporphyrin, dibenzotetraazaannulene, phthalocyanine, choline, and chlorin; or polymers thereof. Among them, polypyrrole, which is a polymer of pyrrole, is preferable. These may be used alone or in combination of two or more kinds.

As the electrically-conductive polymer, some compounds overlap with the complex-forming organic compounds mentioned above, and examples of the electrically-conductive polymer include polyaniline, polypyrrole, polythiophene, polyacethylene, polyvinyl carbazole, polytriphenylamine, polypyridine, polypyrimidine, polyquinoxaline, polyphenyl quinoxaline, polyisothianaphthene, polypyridinediyl, polythienylene, polyparaphenylene, polyflurane, polyacene, polyfuran, polyazulene, polyindole, and polydiaminoanthraquinone. Among them, polypyrrole is preferable. These may be used alone or in combination of two or more kinds.

When the fuel-side electrode 2 and the oxygen-side electrode 3 are made of a transition metal supported on a carbon composite, the mixing proportion of the complex-forming organic compound and/or the electrically-conductive polymer is, as a total amount thereof, in the range of, for example, 1 part by weight to 100 parts by weight, or preferably 10 parts by weight to 50 parts by weight, per 100 parts by weight of carbon.

When the fuel-side electrode 2 and the oxygen-side electrode 3 are made of a transition metal supported on a complex-forming organic compound and/or an electrically-conductive polymer, these electrodes are formed in the following manner. First, 1 part by weight to 10 parts by weight of a solvent is added to a total amount of 100 parts by weight of the electrically-conductive polymer and/or the complex-forming organic compound, and the mixture is then stirred. Thus, a carrier dispersion having the electrically-conductive polymer and/or the complex-forming organic compound dispersed in the solvent is prepared. Examples of the solvent include known solvents such as water and lower alcohols such as methanol, ethanol, and propanol.

In the meantime, a salt containing a transition metal in an amount of 10 parts by weight to 1000 parts by weight per a total amount of 100 parts by weight of the electrically-conductive polymer and/or the complex-forming organic compound is dissolved in 1000 parts by weight to 100000 parts by weight of the solvent to prepare a transition metal-containing solution. Then, the transition metal-containing solution is added to the carrier dispersion, and the mixture is then stirred to prepare a mixed solution of the transition metal-containing solution and the carrier dispersion. At this time, the stirring temperature is preferably 25°C to 50°C, and the stirring time is preferably 10 minutes to 60 minutes.

Subsequently, a reducing agent-containing solution containing a reducing agent is added to the mixed solution, and thereafter, the mixture is allowed to stand at 25°C to 80°C for 10 minutes to 60 minutes. Thus, the transition metal is supported on the electrically-conductive polymer and/or the complex-forming organic compound. Examples of the reducing agent contained in the reducing agent-containing solution include known reducing agents such as sodium borohydride, potassium borohydride, lithium borohydride, and hydrazine. Among them, sodium borohydride is preferable. For example, in the case of using sodium borohydride as the reducing agent, sodium borohydride is dissolved together with sodium hydroxide in water to prepare an aqueous solution thereof, and the aqueous solution thereof is added to the mixed solution under a nitrogen atmosphere. Thus, a contact of sodium borohydride with oxygen can be prevented, thereby preventing the sodium borohydride from being decomposed due to such contact with oxygen.

Thereafter, the mixed solution that has been allowed to stand is filtered, washed, and vacuum dried at a temperature of, for example, 25°C to 100°C. Thus, a dry powder of the electrically-conductive polymer and/or the complex-forming organic compound having the transition metal supported thereon (transition metal supported substance) is obtained.

Alternatively, when the fuel-side electrode 2 and the oxygen-side electrode 3 are made of a transition metal supported on a carbon composite, these electrodes are formed, for example, by forming a carbon composite and then supporting a transition metal on the carbon composite.

More specifically, first, carbon is added to a solvent in an amount of 100 parts by weight to 1000 parts by weight per 100 parts by weight of the carbon, the solvent is stirred to thereby prepare a carbon dispersion in which carbon is dispersed in the solvent. At this time, an organic acid such as acetic acid and oxalic acid may be appropriately added thereto as required, and the amount of the organic acid added is in the range of, for example, 1 part by weight to 50 parts by weight per 100 parts by weight of the carbon. Examples of the solvent used include those mentioned above. Further, the stirring temperature is preferably 10°C to 30°C, and the stirring time is preferably 10 minutes to 60 minutes.

Subsequently, when the electrically-conductive polymer and/or a polymer of the complex-forming organic compound is/are used, as a total amount thereof, 1 part by weight to 50 parts by weight, or preferably 10 parts by weight to 20 parts by weight of the corresponding monomers (complex-forming organic compound) per 100 parts by weight of the carbon are added to the carbon dispersion and the mixture is then stirred. At this time, the stirring temperature is preferably 10°C to 30°C, and the stirring time is preferably 1 minute to 10 minutes. Subsequently, the monomers in the carbon dispersion are polymerized. The monomers are polymerized using oxidation polymerization such as chemical oxidation polymerization and electrolytic oxidation polymerization. Preferably, chemical oxidation polymerization is used. In the chemical oxidation polymerization, a catalyst for oxidation polymerization is added to the carbon dispersion containing the monomers and the mixture is then stirred to thereby polymerize the monomers. Examples of the catalyst for oxidation polymerization include known catalysts for oxidation polymerization, such as peroxide such as hydrogen peroxide and benzoyl peroxide; and permanganic acid such as potassium permanganate and magnesium permanganate. Among them, hydrogen peroxide is preferable. During the polymerization of the monomers, the stirring temperature (polymerization temperature) is preferably 10°C to 30°C, and the stirring time is preferably 10 minutes to 90 minutes.

On the other hand, when the complex-forming organic compound is used without polymerizing, per 100 parts by weight of the carbon, for example, 1 part by weight to 50 parts by weight, or preferably, 10 parts by weight to 20 parts by weight of a low molecular weight complex-forming organic compound is added to the carbon dispersion, and the mixture is then stirred. At this time, the stirring temperature is preferably 50°C to 100°C, and the stirring time is preferably 10 minutes to 60 minutes.

Thereafter, the dispersion in which a carbon composite made of the carbon and the electrically-conductive polymer and/or the complex-forming organic compound is dispersed is filtered, washed, and vacuum dried at a temperature of, for example, 50°C to 100°C. Thus, a dry powder of the carbon composite is obtained.

After the carbon composite is obtained, a transition metal is supported on the carbon composite.

More specifically, 100 parts by weight to 3000 parts by weight of a solvent is added to 100 parts by weight of the carbon composite, and the mixture is then stirred. Thus, a carbon composite dispersion having the carbon composite dispersed in the solvent is prepared. Examples of the solvent include those mentioned above.

In the meantime, a salt containing 1 part by weight to 150 parts by weight of a transition metal per 100 parts by weight of the carbon composite is dissolved in 100 parts by weight to 1000 parts by weight of the solvent to prepare a transition metal-containing solution. Then, the transition metal-containing solution is added to the carbon composite dispersion, and the mixture is then stirred to prepare a mixed solution of the transition metal-containing solution and the carbon composite dispersion. At this time, the stirring temperature is preferably 50°C to 100°C, and the stirring time is preferably 10 minutes to 60 minutes.

Subsequently, a reducing agent-containing solution containing a reducing agent is added to the mixed solution of the transition metal-containing solution and the carbon composite dispersion until the mixed solution thereof has a pH in the range of 10 to 12, and thereafter, the mixture is allowed to stand at 60°C to 100°C for 10 minutes to 60 minutes. Thus, the transition metal is supported on the carbon composite. Examples of the reducing agent contained in the reducing agent-containing solution include those mentioned above. Among them, sodium borohydride is preferable. For example, in the case of using sodium borohydride as the reducing agent, sodium borohydride is dissolved together with sodium hydroxide in water to prepare an aqueous solution thereof, and the aqueous solution thereof is added to the mixed solution under a nitrogen atmosphere. Thus, a contact of sodium borohydride with oxygen can be prevented, thereby preventing the sodium borohydride from being decomposed due to such contact with oxygen.

Thereafter, the mixed solution that has been allowed to stand is filtered, washed, and vacuum dried at a temperature of, for example, 50°C to 100°C. Thus, a dry powder of the carbon composite having the transition metal supported thereon is obtained.

When the fuel-side electrode 2 is free of a transition metal, and a complex-forming organic compound and/or an electrically-conductive polymer, the fuel-side electrode 2 can be formed using electrode material such as a fine powder of cobalt metal, and carbon having cobalt supported thereon (cobalt supported carbon) as a metal catalyst.

The fine powder of cobalt metal can be defined as, for example, fine powder whose primary particles have an average particle diameter of 1 µm or less. As employed herein, the average particle diameter refers to the average of crystal diameters measured by X-ray diffraction method or primary particle diameters determined by morphological observation under a transmission electron microscope. Therefore, the particle diameter determined by sedimentation method involving laser diffraction increases as the primary particles are agglomerated, but such particle diameter is excluded from those average particle diameters mentioned above. Further, the specific surface area of the fine powder of cobalt metal is in the range of, for example, from 5 m²/g to 60 m²/g.

On the other hand, in the cobalt supported carbon, the cobalt metal to be supported has an average primary particle diameter in the range of, for example, 1 nm to 100 nm, and a specific surface area in the range of, for example, 6 m²/g to 700 m²/g. Further, in order to allow cobalt to be supported on carbon, a known supporting method such as an impregnation method, a vacuum deposition method, and a physical adsorption method may be used to support the cobalt on the carbon. For example, when cobalt is supported on carbon by an impregnation method, a solution or slurry of an inorganic salt of cobalt such as cobalt nitrate is prepared, and the solution or slurry is then allowed to penetrate a porous carbon carrier, and the resulting product is then calcined in a reducing atmosphere.

Alternatively, when the oxygen-side electrode 3 is free of a transition metal, and a complex-forming organic compound and/or an electrically-conductive polymer, the oxygen-side electrode 3 can be formed using electrode material such as porous substance having catalyst supported thereon (catalyst supported porous substance).

Examples of the catalyst include elements belonging to the groups 8 to 10 (VIII) in the periodic table such as element of the platinum group (Ru, Rh, Pd, Os, Ir, Pt) and element of the iron group (Fe, Co, Ni), element of the group 11 (IB) such as Cu, Ag and Au or combination thereof. Among these elements, Ag and Ni are preferable, or Ag is more preferable. The supported amount of the catalyst is in the range of, for example, 0.1 to 10 mg/cm², or preferably 0.1 to 5 mg/cm², per area of the carbon. Examples of the porous substance include carbon.

In the same manner as the oxygen-side electrode 3 mentioned above, the fuel-side electrode 2 may be formed using electrode material such as catalyst supported porous substance. Further, in the same manner as the fuel-side electrode 2 mentioned above, the oxygen-side electrode 3 may be formed using electrode material such as fine powder of cobalt metal and cobalt supported carbon.

In order to form the fuel-side electrode 2 using the electrode material exemplified above, for example, a known method is used to form a membrane-electrode assembly and the electrolyte layer 4. More specifically, first, a mixture of an electrode material and an anion exchange resin is dispersed in a solvent to prepare a dispersion of the electrode material. Examples of the solvent include those mentioned above. Among them, organic solvents such as alcohol are preferable. Next, the dispersion is applied onto one surface of the electrolyte layer 4. Thus, the fuel-side electrode 2 fixed to the one surface of the electrolyte layer 4 can be obtained. For example, when the electrode material is a transition metal supported substance, the content of the electrode material is 0.01 mg/cm² to 10 mg/cm² per area of the electrolyte layer 4, and when the electrode material is a transition metal supported carbon composite, the content of the electrode material is 0.01 mg/cm² to 10 mg/cm² per area of the electrolyte layer 4. Further, when the electrode material is a fine powder of cobalt metal, the content of the electrode material is 0.1 mg/cm² to 10 mg/cm² per area of the electrolyte layer 4, and when the electrode material is cobalt supported carbon, the content of the electrode material is 0.1 mg/cm² to 10 mg/cm² per area of the electrolyte layer 4.

The fuel-side electrode 2 fixed to the one surface of the electrolyte layer 4 has a thickness in the range of, for example, 1 µm to 100 µm, or preferably 1 µm to 10 µm.

On the other hand, in order to form the oxygen-side electrode 3 using the electrode material exemplified above, the oxygen-side electrode 3 may be fixed to the other surface of the electrolyte layer 4, for example, by the same method as used for the fuel-side electrode 2 mentioned above. Thus, the oxygen-side electrode 3 fixed to the other surface of the electrolyte layer 4, one surface of which the fuel-side electrode 2 is fixed to, can be obtained. That is, the oxygen-side electrode 3 is fixed to the other surface of the electrolyte layer 4, whereby the fuel-side electrode 2 and the oxygen-side electrode 3 are arranged in opposed relation to each other while sandwiching the electrolyte layer 4. For example, when the electrode material is a transition metal supported substance, the content of the electrode material is 0.01 mg/cm² to 10 mg/cm² per area of the electrolyte layer 4, and when the electrode material is a transition metal supported carbon composite, the content of the electrode material is 0.01 mg/cm² to 10 mg/cm² per area of the electrolyte layer 4. Further, when the electrode material is a catalyst supported porous substance, the content of the electrode material is 0.1 mg/cm² to 10 mg/cm² per area of the electrolyte layer 4.

The oxygen-side electrode 3 fixed to the other surface of the electrolyte layer 4 has a thickness in the range of, for example, 0.1 µm to 100 µm, or preferably 1 µm to 10 µm.

The electrolyte layer 4 is a layer allowing an anion component to migrate and is formed, for example, using an anion exchange membrane. The anion exchange membrane is not particularly limited as long as it is a medium allowing a hydroxide ion (OH⁻), which is an anion component generated at the oxygen-side electrode 3, to migrate from the oxygen-side electrode 3 to the fuel-side electrode 2, and examples thereof include a solid polymer membrane (anion exchange resin) having an anion exchange group such as a quaternary ammonium group and a pyridinium group.

The cell S for fuel cell further includes a fuel supplying member 5 and an oxygen supplying member 6. The fuel supplying material 5 is made of a gas-impermeable electrically-conductive member and one side thereof is in contact with and opposed to a surface of the fuel-side electrode 2 of the side opposite to the other surface of which is in contact with the electrolyte layer 4. Further, this fuel supplying member 5 has a fuel-side channel 7 formed therein for allowing the fuel to come in contact with the entire fuel-side electrode 2 as a zigzag groove which is a depression on one side thereof. This fuel-side channel 7 has a feed opening 8 and a discharge opening 9 formed connecting to the upstream end and the downstream end thereof, respectively, extending through the fuel supplying member 5.

Similarly to the fuel supplying material 5, the oxygen supplying material 6 is made of a gas-impermeable electrically-conductive member and one side thereof is in contact with and opposed to a surface of the oxygen-side electrode 3 of the side opposite to the other surface of which is in contact with the electrolyte layer 4. Further, the oxygen supplying member 6, too, has an oxygen-side channel 10 formed therein for allowing oxygen (air) to come in contact with the entire oxygen-side electrode 3 as a zigzag groove which is a depression on one side thereof. This oxygen-side channel 10, too, has a feed opening 11 and a discharge opening 12 formed connecting to the upstream end and the downstream end thereof, respectively, extending through the oxygen supplying member 6.

As described above, this fuel cell 1 is formed as a stack structure having a plurality of cells S for fuel cell stacked therein. Therefore, the fuel supplying member 5 and the oxygen supplying member 6 are configured as a separator having the fuel-side channel 7 and the oxygen-side channel 10 formed on both sides thereof, though not shown.

Although not shown in FIG. 1, the fuel cell 1 includes a current collector formed by an electrically-conductive material and the electromotive force generated in the fuel cell 1 can be externally withdrawn at the terminals provided in the current collector.

Further, empirically (on the order of model), a voltage generated at the fuel cell 1 can be measured by a voltmeter 14 provided in an external circuit 13 with which the fuel supplying member 5 and the oxygen supplying member 6 for fuel cell are connected to each other.

Next, electricity generation by the fuel cell 1 will be described.

In the fuel cell 1, electricity is generated by supplying air to the oxygen-side channel 10 and also supplying fuel to the fuel-side channel 7.

Examples of the fuel supplied to the fuel-side channel 7 include compounds containing at least hydrogen, such as hydrogen (H₂); hydrocarbons such as methane (CH₄), ethane (C₂H₆), and propane (C₃H₈); alcohols such as methanol (CH₃OH) and ethanol (C₂H₅OH); hydrazines such as hydrazine (NH₂NH₂), hydrated hydrazine (NH₂NH₂·H₂O), hydrazine carbonate ((NH₂NH₂)₂CO₂), hydrazine sulfate (NH₂NH₂·H₂SO₄), monomethyl hydrazine (CH₃NHNH₂), dimethyl hydrazine ((CH₃)₂NNH₂, CH₃NHNHCH₃) and carbon hydrazide ((NHNH₂)₂CO); urea (NH₂CONH₂); ammonia (NH₃); heterocycles such as imidazole, 1,3,5-triazine and 3-amino-1,2,4-triazole; and hydroxylamine such as hydroxylamine (NH₂OH) and hydroxylamine sulfate (NH₂OH·H₂SO₄). These may be used alone or in combination of two or more kinds.

Among the fuel compounds mentioned above, compounds free of carbon, that is, hydrazine (NH₂NH₂), hydrated hydrazine (NH₂NH₂·H₂O), hydrazine sulfate (NH₂NH₂·H₂SO₄), ammonia (NH₃), hydroxylamine (NH₂OH), and hydroxylamine sulfate (NH₂OH·H₂SO₄) are preferable. When the fuel is such compound free of carbon, the catalyst is not poisoned by CO, thus achieving improved durability and further realizing substantially zero emission.

As the fuel, the fuel compound exemplified above may be supplied as it is, or may be used in the form of solution in water and/or alcohol (e.g., lower alcohol such as methanol, ethanol, propanol and isopropanol). In this case, the concentration of the fuel compound in the solution depends on the kind of the fuel compound, and is, for example, from 1 to 90% by weight, or preferably from 1 to 30% by weight. Further, as the fuel, there may be supplied the fuel compound mentioned above in gas form (e.g., vapor).

The electricity generation in the fuel cell 1 will be described more specifically. In the fuel-side electrode 2 where fuel has been supplied, hydrogen (H₂) is produced from the fuel, and this hydrogen (H₂) is oxidized to release an electron (e⁻) from the hydrogen (H₂), so that a proton (H⁺) is produced. The electron (e⁻) released from the hydrogen (H₂) reaches the oxygen-side electrode 3 through the external circuit 13. That is, the electron (e⁻) which passes through the external circuit 13 serves as electric current. On the other hand, in the oxygen-side electrode 3, an electron (e⁻), water (H₂O) supplied from outside or produced by the reaction in the fuel cell 1, and oxygen (O₂) in the air flowing through the oxygen-side channel 10 are allowed to react to produce a hydroxide ion (OH⁻) (see the following reaction formula (2)). Then, the hydroxide ion (OH⁻) thus produced passes through the electrolyte layer 4, reaching the fuel-side electrode 2. When the hydroxide ion (OH⁻) reaches the fuel-side electrode 2, in the fuel-side electrode 2, the hydroxide ion (OH⁻) and the hydrogen (H₂) in the fuel are allowed to react to produce an electron (e⁻) and water (H₂O) (see the following reaction formula (1)). The electron (e⁻) thus produced migrates through the external circuit 13 from the fuel supplying material 5 to the oxygen supplying material 6, and is then supplied to the oxygen-side electrode 3. Such continuous electrochemical reaction at the fuel-side electrode 2 and the oxygen-side electrode 3 forms a closed/open circuit in the fuel cell 1, thereby producing an electromotive force, resulting in electricity generation.

(1) 2H₂+4OH⁻ →4H₂O+4e⁻ (Reaction at fuel-side electrode 2)

(2) O₂+2H₂O+4e⁻ → 4OH⁻ (Reaction at oxygen-side electrode 3)

(3) 2H₂+O₂ → 2H₂O (Reaction in the entire fuel cell 1)

The operating conditions of the fuel cell 1 are not particularly limited, and, for example, the pressure at the fuel-side electrode 2 side is predetermined to be 100 kPa or less, or preferably 50 kPa or less, the pressure at the oxygen-side electrode 3 side is predetermined to be 100 kPa or less, or preferably 50 kPa or less, and the temperature of the cell S for fuel cell is predetermined to be from 30°C to 100°C, or preferably from 60°C to 90°C.

In the foregoing, an embodiment of the present invention has been discussed, but the present invention can also be embodied in a different manner.

For example, in the above-mentioned embodiments, the polymer electrolyte fuel cell has been exemplified to describe the present invention. However, the present invention can be applied to various fuel cells such as an alkaline fuel cell using an aqueous solution of KOH or an aqueous solution of NaOH as the electrolyte layer 4, a molten carbonate fuel cell, and a solid oxide fuel cell.

Examples of the use of the fuel cell of the present invention include power supply for driving motor in automobile, ship, aircraft, etc., and power supply in communications terminal such as cellular phone.

### EXAMPLES

While in the following, the present invention is described with reference to Examples and Comparative Examples, the present invention is not limited to any of them.

### <Measurement of Activity of Oxygen-Side Electrode and Fuel-Side Electrode>

### Example 2

### 1) Preparation of Polypyrrole Carbon Composite (PPy-C)

Ten grams of carbon (Vulcan XC-72 manufactured by E-TEK Inc.; specific surface area: 250 m²/g) and 2.5 ml of acetic acid (acetic acid concentration: 100%) were added to 75 ml of pure water, and the mixture was stirred at room temperature (approximately 25°C) for 20 minutes to prepare a carbon dispersion having carbon dispersed therein. Subsequently, 2 g of pyrrole (manufactured by Aldrich) was added to the carbon dispersion and stirred at room temperature for 5 minutes. Further, 10 ml of hydrogen peroxide having a concentration of 10% was added to the carbon dispersion and stirred at room temperature for 1 hour, whereby pyrrole was subjected to oxidation polymerization. Thereafter, the carbon dispersion was filtered, washed with warm water, and vacuum dried at 90°C. Thus, a PPy-C dry powder in which pyrrole was polymerized on carbon was obtained.

### 2) Preparation of Cobalt Supported PPy-C Electrode

Two grams of the PPy-C dry powder obtained in step 1) was added to 44 ml of pure water, and the mixture was stirred for 30 minutes while being heated up to 80°C, so that a PPy-C dispersion having PPy-C dispersed therein was obtained. Subsequently, 1.1 g of cobalt nitrate (II) hexahydrate was dissolved in 11 ml of pure water to prepare an aqueous cobalt-containing solution. Then, the aqueous cobalt-containing solution was added to the PPy-C dispersion and stirred at 80°C for 30 minutes to thereby obtain a cobalt-PPy-C-mixed solution. Subsequently, 5.23 g of sodium borohydride and 0.37 g of sodium hydroxide were dissolved in 500 ml of pure water to prepare an alkaline aqueous solution. Next, an alkaline aqueous solution was gradually added to the cobalt-PPy-C-mixed solution until the cobalt-PPy-C-mixed solution had a pH of 11.1, and thereafter, the cobalt-PPy-C-mixed solution was allowed to stand at 80°C for 30 minutes. All the operations that led up to the operation (operation of adding the alkaline aqueous solution) in step 2) were performed under a nitrogen atmosphere. Thereafter, the cobalt-PPy-C-mixed solution was filtered, washed with warm water, and vacuum dried at 90°C. Thus, a dry powder of a cobalt supported PPy-C electrode (support concentration of cobalt: 10% by weight) having cobalt supported on PPy-C was obtained.

### Example 1

### 1) Preparation of PPy-C

PPy-C was prepared by the same method as in step 1) of Example 2.

### 2) Preparation of Silver Supported PPy-C Electrode

Two grams of PPy-C obtained in step 1) was added to 44 ml of pure water, and the mixture was stirred for 30 minutes while being heated up to 80°C, so that a PPy-C dispersion having PPy-C dispersed therein was obtained. Subsequently, 1.44 g of silver nitrate was dissolved in 11 ml of pure water to prepare an aqueous silver-containing solution. Then, the aqueous silver-containing solution was added to the PPy-C dispersion and stirred at 80°C for 30 minutes to thereby obtain a silver-PPy-C-mixed solution. Subsequently, 5.23 g of the sodium borohydride and 0.37 g of sodium hydroxide were dissolved in 500 ml of pure water to prepare an alkaline aqueous solution. Next, the alkaline aqueous solution was gradually added to the silver-PPy-C-mixed solution until the silver-PPy-C-mixed solution had a pH of 11.1, and thereafter, the silver-PPy-C-mixed solution was allowed to stand at 80°C for 30 minutes. All the operations that led up to the operation (operation of adding the alkaline aqueous solution) in step 2) were performed under a nitrogen atmosphere. Thereafter, the silver-PPy-C-mixed solution was filtered, washed with warm water, and vacuum dried at 90°C. Thus, a dry powder of a silver supported PPy-C electrode (support concentration of silver: 31 % by weight) having silver supported on PPy-C was obtained.

### Example 3

### 1) Preparation of Cobalt Supported Polypyrrole (PPy) Electrode

To a flask was added 13.2 g of an aqueous solution containing 5% by weight of polypyrrole (manufactured by Aldrich; product number: 482552) and 67 ml of pure water, and stirred at 80°C for 30 minutes to thereby obtain a PPy dispersion having polypyrrole (PPy) dispersed. Subsequently, 1.65 g of cobalt nitrate (II) hexahydrate was dissolved in 17 ml of pure water to prepare an aqueous cobalt-containing solution. Then, the aqueous cobalt-containing solution was added to the PPy-C dispersion and stirred at 80°C for 30 minutes to thereby obtain a cobalt-PPy-C-mixed solution. Subsequently, 5.23 g of sodium borohydride and 0.37 g of sodium hydroxide were dissolved in 500 ml of pure water to prepare an alkaline aqueous solution. Next, the alkaline aqueous solution was added dropwise by 20 ml/min at 80°C, and thereafter, the cobalt-PPy mixed solution was allowed to stand for 30 minutes. Thereafter, the cobalt-PPy mixed solution was filtered, washed with warm water at 1000°C, and vacuum dried at 80°C. Thus, a dry powder of a cobalt supported PPy-C electrode (support concentration of cobalt: 33% by weight) having cobalt supported on PPy-C was obtained.

### Comparative Example 2

Five grams of cobalt nitrate (II) hexahydrate was dissolved in 10 ml of pure water to prepare an aqueous cobalt-containing solution. Subsequently, 1 g of carbon (Vulcan XC-72 manufactured by E-TEK Inc.; specific surface area: 250 m²/g) was impregnated with the aqueous cobalt-containing solution for 3 0 minutes. Thereafter, the carbon impregnated with the aqueous cobalt-containing solution was calcined under a reducing atmosphere, to thereby obtain a dry powder of cobalt supported carbon electrode (support concentration of cobalt: 50% by weight).

### Comparative Example 1

A silver supported carbon electrode (Silver on Vulcan XC-72 manufactured by E-TEK Inc.) having a support concentration of 50% by weight was used.

### Comparative Example 3

A cobalt nanopowder (average particle diameter: 28 nm; specific surface area: 50 m²/g; manufactured by Junye Nano Material Co.) was used.

### Evaluation Test

### 1) Preparation of Test Piece

A mixture of a dry powder of each electrode obtained in each of Examples and Comparative Examples and an anion exchange resin was appropriately dispersed in an organic solvent such as alcohol to prepare an ink. All the inks were prepared so that the catalyst (cobalt or silver) supported on each of the electrodes was contained in an amount of 2.5 µg/µL. Subsequently, 1 µL of the ink thus obtained was weighed out by a micropipette, and added dropwise on a glassy carbon electrode. Thereafter, the glassy carbon was dried to obtain a test piece.

### 2) Measurement of Activity of Oxygen-Side Electrode

The test piece prepared from a dry powder of the electrode obtained in each of Examples 1 to 2 and Comparative Examples 1 to 2 was used for activity measurement.

The activity of the oxygen-side electrode was measured by electrochemistry measuring method (cyclic voltammetry) using a rotary disc electrode. More specifically, a potential was scanned in a 1N aqueous solution of KOH in which oxygen had been deaerated by nitrogen bubbling to stabilize the test piece and to perform background measurement of the test piece. Subsequently, oxygen was saturated by bubbling oxygen in the aqueous solution, and the oxygen reduction activity of the oxygen-side electrode was measured. The scanning range of the potential was from -0.8 V (vs. Ag/AgCl) to 0.1 V (vs. Ag/AgCl) in Example 2 and Comparative Example 2, and from -0.8 V (vs. Ag/AgCl) to 0.2 V (vs. Ag/AgCl) in Example 1 and Comparative Example 1. The electrode rotation speed was 2000 rpm.

### 3) Measurement of Activity of Fuel-Side Electrode

The test piece produced from a dry powder of the electrode obtained in each of Example 3 and Comparative Example 3 was used for activity measurement.

The activity of the fuel-side electrode was measured by electrochemical measuring method (cyclic voltammetry) using a rotary disc electrode. More specifically, after the above-mentioned test piece of the fuel-side electrode was stabilized in a 1N aqueous solution of KOH, the test piece was dipped in a 1N aqueous solution of KOH containing hydrated hydrazine in a proportion of 1 mol/L, and its activity was measured. A platinum wire was used as a counter electrode, while a silver-silver chloride electrode was used as a reference electrode. The scanning range of the activity measurement was from -1.4 to -1 V for CoPPy and Co (with respect to Ag/AgCl).

### 4) Measurement Results

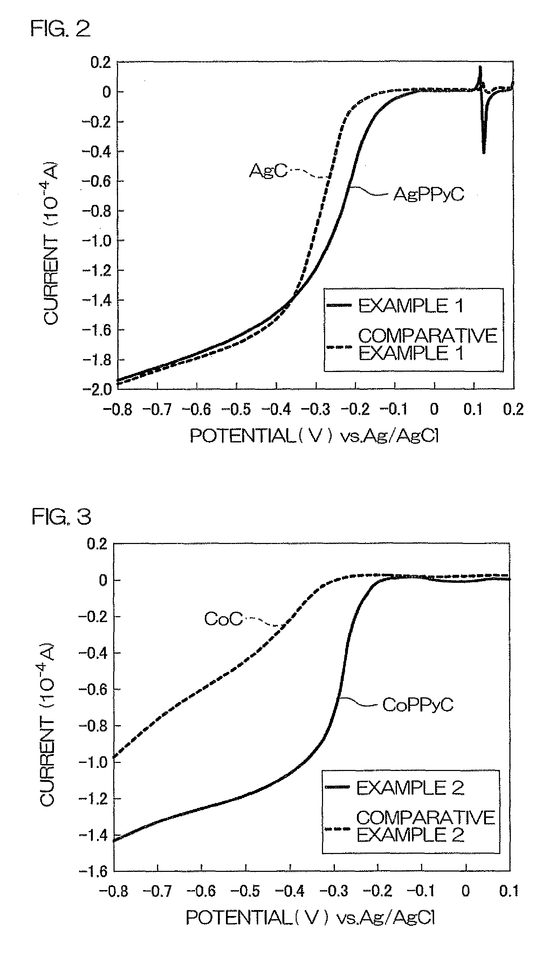

The results measured in step 2) are shown in FIGS. 2 and 3. FIG. 2 shows the results of Example 1 and Comparative Example 1, and FIG. 3 shows the results of Example 2 and Comparative Example 2.

As shown in FIGS. 2 and 3, the results of Examples 1 and 2 according to the present invention showed that a rise of the reduction current occurred at a higher potential as compared with those of Comparative Examples 1 and 2. For example, while the potential at the rise of the reduction current in Example 1 was -0.021 V (vs. Ag/AgCl), the potential at the rise of the reduction current in Comparative Example 1 was -0.102 V (vs. Ag/AgCl) (see FIG. 2).

The results of Examples 1 and 2 according to the present invention showed that a higher reduction current was obtained at the same potential as compared with those of Comparative Examples 1 and 2. For example, while the magnitude of the reduction current in Example 2 at -0.4 V (vs. Ag/AgCl) was 1.092 x 10⁻⁴ A, the magnitude of the reduction current in Comparative Example 2 was 0.235 x 10⁻⁴ A (see FIG. 3).

These results confirmed that the fuel cell including the electrodes of Examples 1 and 2 could activate an oxygen reduction reaction, which allowed enhancement of the electricity generating performance of the fuel cell.

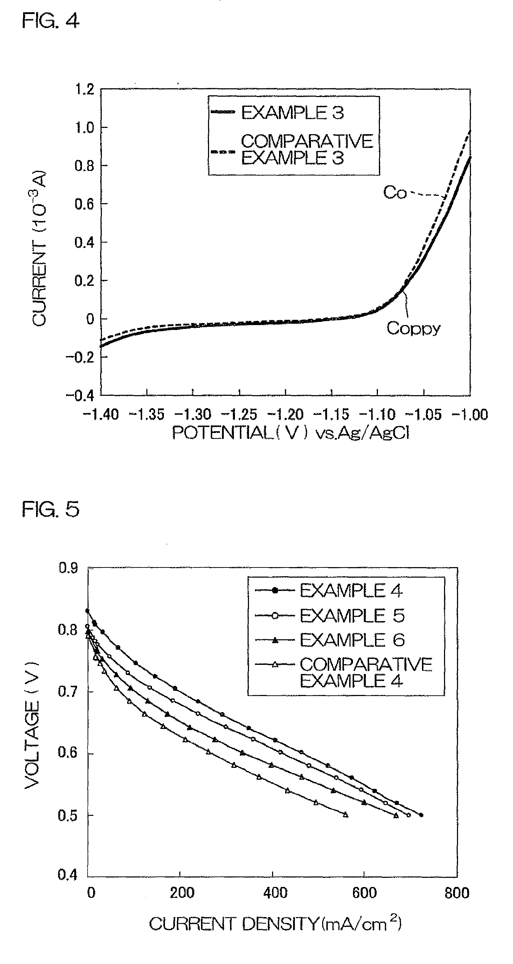

The results measured in step 3) are shown in FIG. 4.

As shown in FIG. 4, the results of Example 3 according to the present invention showed that a rise of the oxidation current occurred at almost the same potential as those of Comparative Example 3. For example, while the potential at the rise of the oxidation current in Example 3 was -1.23 V (vs. Ag/AgCl), the potential at the rise of the reduction current in Comparative Example 1 was -1.23 V (vs. Ag/AgCl) (see FIG. 4).

Further, the results of Example 3 according to the present invention showed that almost the same oxidation current was obtained at the same potential as compared with those of Comparative Example 3. For example, at a potential of -1.00 V (vs. Ag/AgCl), the magnitude of the oxidation current in Example 3 was 0.85 x 10⁻³ A and that in Comparative Example 3 was 0.93 x 10⁻³A (see FIG. 4).

These results confirmed that the fuel cells including these electrodes in Example 3 and Comparative Example 3 exhibited an almost equal level of activation performance of the hydrazine oxidation reaction.

However, the cobalt supported PPy of Example 3 has a structure in which two polypyrrole (PPy) monomer units (C₄H₃N) are coordinated per a cobalt atom, and has a molecular weight of approximately 189. On the other hand, the cobalt has an atomic weight of approximately 59. That is, in Example 3 according to the present invention, the hydrazine oxidation reaction can be activated to nearly the same extent as in Comparative Example 3 using the content of cobalt which is approximately 1/3 of the mass of the cobalt in Comparative Example 3. Therefore, the measurement results shown in FIG. 4 confirmed that the use of the cobalt required for activation of the hydrogen oxidation reaction at the electrodes could be reduced, which in turn the cost required for activation of the hydrogen oxidation reaction could be reduced.

### <Measurement of Electricity Generating Performance of Cell>

### Example 4

A cell unit of an anion exchange membrane-electrode assembly (test piece) was produced for a cobalt supported PPy electrode as the fuel-side electrode and for a cobalt supported PPy-C electrode as the oxygen-side electrode, and the cell unit was then measured for electricity generating performance.

### Example 5

A cell unit of an anion exchange membrane-electrode assembly (test piece) was produced for a Ni electrode as the fuel-side electrode and for a silver supported PPy-C electrode as the oxygen-side electrode, and the cell unit was then measured for electricity generating performance.

### Example 6

A cell unit of an anion exchange membrane-electrode assembly (test piece) was produced for a Ni electrode as the fuel-side electrode and for a cobalt supported PPy-C electrode as the oxygen-side electrode, and the cell unit was then measured for electricity generating performance.

### Comparative Example 4

A cell unit of an anion exchange membrane-electrode assembly (test piece) was produced for a Ni electrode as the fuel-side electrode and for a silver supported carbon electrode as the oxygen-side electrode, and the cell unit was then measured for electricity generating performance.

### Evaluation Test

### 1) Preparation of Anion Exchange Membrane-Electrode Assembly (Test Piece)

An anion exchange membrane-electrode assembly (test piece) was obtained in the following manner. A fuel-side electrode in each of Examples and Comparative Example 4, and an anion exchange resin was mixed. The resulting mixture was appropriately dispersed in an organic solvent such as alcohol to prepare an ink. Thereafter, the ink thus obtained was directly applied to one side surface of an anion exchange membrane, and a fuel-side electrode was integrally formed on the one side surface thereof.

Next, an oxygen-side electrode in each of Examples and Comparative Example 4 and an anion exchange resin were mixed. The resulting mixture was appropriately dispersed in an organic solvent such as alcohol to prepare an ink. Thereafter, the ink thus obtained was directly applied to the other side surface of the anion exchange membrane, and the oxygen-side electrode was integrally formed on the other side surface thereof. As a result, a test piece was obtained.

The amounts of catalyst supported on the oxygen-side electrode and the fuel-side electrode in the anion exchange membrane-electrode assembly are as follows.

### Example 5

Fuel-side electrode (CoPPy): 1.1 mg/cm²
Oxygen-side electrode (CoPPyC); 0.3 mg/cm²

### Example 6

Fuel-side electrode (Ni): 2.7 mg/cm²
Oxygen-side electrode (AgPPyC): 0.4 mg/cm²

### Example 7

Fuel-side electrode (Ni): 2.6 mg/cm²
Oxygen-side electrode (CoPPyC): 0.4 mg/cm²

### Comparative Example 4

Fuel-side electrode (Ni): 2.5 mg/cm²
Oxygen-side electrode (AgC): 0.7 mg/cm²

### 2) Assembly of Cell

A carbon sheet of electrically-conductive porous material which was a gas diffusion layer was bonded to both surfaces of the anion exchange membrane-electrode assembly (test piece) thus obtained in step 1) to thereby prepare a single cell unit of fuel cell.

### 3) Measurement of Electricity Generating Performance of Cell

A 1 N aqueous solution of KOH of 1 mol/dm³ of hydrated hydrazine and oxygen were supplied into the fuel-side electrode and the oxygen-side electrode of the single cell unit produced in step 2) at a rate of 2 mL/min and 0.5 L/min, respectively. Referring to the operating conditions of the cell, the feeding pressure was 120 kPa·abs and the cell operating temperature was 80°C.

### 4) Measurement Results

The results measured in step 3) are shown in FIG. 5.

As shown in FIG. 5, the cell units of Examples 4 to 6 exhibit a high electricity generating performance as compared with that of Comparative Example 4. In particular, the cell unit of Example 5 in which polypyrrole (PPy) is contained in both the fuel-side electrode and the oxygen-side electrode exhibits a high electricity generating performance. For example, while the magnitudes of the current densities in Examples 4 to 6 at 0.5 V were 723 mA/cm², 697 mA/cm², and 669 mA/cm² in this order, the magnitude of the current density in Comparative Example 4 at 0.5 V was 558 mA/cm² (see FIG. 5). Further, while the magnitudes of the current densities in Examples 4 to 6 at 0.6 V were 464 mA/cm², 420 mA/cm², and 335 mA/cm² in this order, the magnitude of the current density in Comparative Example 4 at 0.6 V was 261 mA/cm² (see FIG. 5).

While the illustrative embodiments of the present invention are provided in the above description, such is for illustrative purpose only and it is not to be construed restrictively. Modification and variation of the present invention that will be obvious to those skilled in the art is to be covered by the following claims.

This application corresponds to Japanese Patent Application Serial No. 2007-82891 filed on March 27, 2007 with Japanese Patent Office, the disclosure of which is incorporated herein by reference.

### INDUSTRIAL APPLICABILITY

As described above, the fuel cell of the present invention is used suitably for various industrial products employing a fuel cell, such as power supply for driving motor in automobile, ship, aircraft, etc., and power supply in communications terminal such as cellular phone.

## Claims

1. A fuel cell comprising:
an electrolyte allowing an anion component to migrate;
a fuel-side electrode and an oxygen-side electrode being arranged in opposed relation to each other while sandwiching the electrolyte;
a fuel supplying material for supplying fuel to the fuel-side electrode; and
an oxygen supplying material for supplying oxygen to the oxygen-side electrode,
wherein the oxygen-side electrode and/or the fuel-side electrode contain(s) a transition metal, and at least one of a complex-forming organic compound and an electrically-conductive polymer.

2. The fuel cell according to claim 1, wherein
the transition metal is silver or cobalt, and
the complex-forming organic compound and the electrically-conductive polymer are polypyrrole.
